# EUROPÄISCHE PATENTSCHRIFT

(11) **EP 1 852 325 B1**
(45) Veröffentlichungstag und Bekanntmachung des Hinweises auf die Patenterteilung: **03.11.2010**
(21) Anmeldenummer: 07008383.7
(22) Anmeldetag: 25.04.2007
(51) Int. Cl.: B60W 30/16, B60W 50/08

(54) **Verfahren zur Folgeregelung für ein Kraftfahrzeug**
Method for preceding-vehicle follow-up control for a motor vehicle
Procédé de régulation de suivi automatisé pour un véhicule automobile

(30) Priorität: 06.05.2006 DE 102006021177
(43) Veröffentlichungstag der Anmeldung: 07.11.2007
(73) Patentinhaber: Bayerische Motoren Werke Aktiengesellschaft, 80809 München (DE)
(72) Erfinder: Funk, Kilian, 80636 München (DE); Schaller, Thomas, 85368 Moosburg (DE)

(56) Entgegenhaltungen:
- EP-A- 1 332 910
- WO-A-03/016943
- WO-A-03/047900
- DE-C1- 4 313 568
- US-A1- 2003 173 127
- US-B1- 6 674 394

## Beschreibung

Die Erfindung betrifft ein Verfahren zur Folgeregelung für ein Kraftfahrzeug, durch welches das Kraftfahrzeug auf einem Verkehrsweg mit mehreren Fahrspuren derart längs- und quergeregelt wird, dass in Folge der Längs- und Querregelung ein Vorderfahrzeug durch das Kraftfahrzeug verfolgt wird.

Aus dem Stand der Technik sind verschiedene Formen von Fahrerassistenzsystemen für Kraftfahrzeuge bekannt. Bekannt sind insbesondere Systeme und Verfahren zur Querregelung eines Kraftfahrzeugs. Dabei werden typischerweise, beispielsweise unter Nutzung einer Kamera und geeigneter Bildverarbeitungsverfahren, Fahrspuren in Fahrtrichtung des Kraftfahrzeugs vermessen. Auf Basis des Fahrspurverlaufs kann beispielsweise ein Lenkmoment bestimmt werden, das geeignet ist, das betreffende Kraftfahrzeug auf seiner Fahrspur zu halten, und die Lenkung des Kraftfahrzeugs kann mit einem solchen Lenkmoment beaufschlagt werden.

Bekannt sind ferner Geschwindigkeitsregelsysteme für Kraftfahrzeuge, beispielsweise so genannte ACC-Systeme (Adaptive Cruise Control). Solche Systeme sind nicht nur in der Lage, die Geschwindigkeit des Fahrzeugs auf eine vom Fahrer gewählte Wunschgeschwindigkeit zu regeln, sondern auch, die Geschwindigkeit des eigenen Fahrzeugs erforderlichenfalls derart an die Geschwindigkeit des vorausfahrenden Fahrzeugs anzupassen, dass dieses in einem geeigneten Sicherheitsabstand verfolgt wird. Zu diesem Zweck ist typischerweise eine geeignete im Wesentlichen in Fahrtrichtung des Kraftfahrzeugs gerichtete Umfeldsensorik, beispielsweise in der Form eines Radarsensors vorhanden, mit welcher die Abstände und auch die Relativgeschwindigkeiten vorausfahrender Fahrzeuge gemessen werden können.

Fortgeschrittene Fahrerassistenzsysteme sind auch in der Lage, Quer- und Längsregelung beim "Verfolgen" eines Vorderfahrzeugs in dem Sinne zu kombinieren, dass das Vorderfahrzeug auch bei nicht geradliniger Fahrt spurgenau verfolgt werden kann. Solche Systeme und Verfahren werden im Folgenden als Systeme und Verfahren zur Folgeregelung bezeichnet.

Aus der WO 03/047900 A1 ist ein System zur automatischen Folgeführung, insbesondere zur automatischen Staufolgeführung, eines Kraftfahrzeugs bekannt, mit mindestens einem Sensor zur Vorraumüberwachung und einer elektronischen Fahrt,- Brems- und Lenkregelung, und mindestens einem Lateralsensor zur Überwachung eines seitlichen Rückraums des Kraftfahrzeugs, wobei das Kraftfahrzeug einem vorausfahrenden Fahrzeug nachfolgt, und wobei für den Fall, dass das vorausfahrende Fahrzeug einen Spurwechsel vornimmt, und sich das Kraftfahrzeug anschließen will, aufgrund von Signalen des Lateralsensors vorausschauend laufend ermittelt wird, ob das Kraftfahrzeug während des Folgeführung einen sicheren Abstand zu einem anderen, von dem Lateralsensor erfassten, Fahrzeug zukünftig unterschreiten wird. Durch das aus der WO 03/047900 A1 bekannte System lassen sich Kollisionen mit Fremdfahrzeugen vermeiden, die ansonsten bei Nutzung einer automatischen Folgeführung enstehen könnten, wenn das vorausfahrende, verfolgte Fahrzeug die Fahrspur wechselt und wenn auf der neuen Fahrspur bereits zumindest ein anderes Fahrzeug fährt.

Das Dokument WO 03/047900 ist als nächstliegenden Stand der Technik nach der Oberbegriff des Anspruchs 1 zu sehen.

Nachteilig an den aus dem Stand der Technik bekannten Systemen und Verfahren zur Folgeregelung ist, dass insbesondere in Bereichen mit erschwerten Bedingungen hinsichtlich einer Fahrspurerkennung nicht zuverlässig unterschieden werden kann, ob ein nicht geradlinig fahrendes verfolgtes Vorderfahrzeug einen Spurwechsel vornimmt (bzw. seine Fahrspur aus anderen Gründen verlässt) oder ob es lediglich einer nicht geradlinigen Fahrspur folgt. Bereiche mit erschwerten Bedingungen hinsichtlich einer Fahrspurerkennung können insbesondere Baustellen- und Staubereiche sein, in welchen Spurmarkierungen falsch angebracht sind, fehlen oder wegen der Verdeckung durch andere Verkehrsteilnehmer nicht sichtbar sind. Die genannte Unterscheidungsproblematik kann zu verschiedenartigen Gefahrensituationen führen. Wenn ein Vorderfahrzeug beispielsweise lediglich einer nicht geradlinigen Fahrspur folgt, dieses Verhalten aber fälschlicherweise als Spurwechsel interpretiert wird, kann das eigene Kraftfahrzeug in der dem vermeintlichen Spurwechsel entgegengesetzten Richtung von der aktuellen Fahrspur abkommen. Wird umgekehrt ein Spurwechsel des Vorderfahrzeugs nicht als solcher erkannt und wird das Vorderfahrzeug weiterhin verfolgt, so wechselt auch das eigene Kraftfahrzeuge die Fahrspur und ohne weitere Maßnahmen besteht die Gefahr, dass das eigene Kraftfahrzeug andere Fahrzeuge auf der neuen Fahrspur "schneidet" oder sogar mit diesen kollidiert.

Aufgabe der Erfindung ist es, ein Verfahren zu schaffen, durch welches Sicherheitsrisiken bei einer Folgeregelung verringert werden.

Diese Aufgabe wird erfindungsgemäß gelöst durch ein Verfahren gemäß Patentanspruch 1. Bevorzugte Ausführungsformen und vorteilhafte Weiterbildungen ergeben sich aus den abhängigen Patentansprüchen.

Unter einer Verfolgung des Vorderfahrzeugs im Sinne der Erfindung ist insbesondere eine spurgenaue Verfolgung des Vorderfahrzeugs zu verstehen, d.h. das Kraftfahrzeug folgt möglichst exakt der Trajektorie des Vorderfahrzeugs. Gegebenenfalls kann die Verfolgung des Vorderfahrzeugs aber beispielsweise wegstrecken- oder verbrauchsoptimiert erfolgen, d.h. unnötige Fahrwege (z.B. "Schlenker") können vermieden werden, vom Vorderfahrzeug weit ausgefahrene Kurven können abgekürzt werden, sofern dadurch nicht die Gefahr besteht, dass das Kraftfahrzeug auf eine andere Fahrspur gerät. Eventuelle Schlenker des Vorderfahrzeugs können auch unter Berücksichtigung einer eventuell vorhandenen seitlichen Straßenbebauung und/oder eventuell vorhandener Seitenfahrzeuge ausgeglichen werden.

Bei Erkennung eines Fahrspurwechsels des Vorderfahrzeugs ist die Verfolgung des Vorderfahrzeugs unterbrechbar bzw. abbrechbar. Die Unterbrechung bzw. der Abbruch kann durch den Fahrer veranlasst werden. Um den Fahrer dabei zu unterstützen, wird dieser vorzugsweise durch eine akustische, optische und/oder haptische Warnausgabe hinsichtlich des Fahrspurwechsels des Vorderfahrzeugs gewarnt. Die Unterbrechung kann auch selbsttätig durch das erfindungsgemäße Verfahren bzw. die zu dessen Ausführung genutzten Einrichtungen des Kraftfahrzeugs erfolgen.

Bei erkanntem Fahrspurwechsel des Vorderfahrzeugs kann - muss jedoch nicht notwendigerweise - eine Übernahmeaufforderung an den Fahrer ausgegeben werden. Anstelle einer Übernahmeaufforderung ist es bei erkanntem Fahrspurwechsel denkbar, die Querregelung des Kraftfahrzeugs für begrenzte Zeit, beispielsweise für die Dauer des erkannten Spurwechsels des Vorderfahrzeugs, ausschließlich an Informationen des Seitenbereichs (z. B. Randbebauung und/oder Fahrzeuge auf der Nebenspur) zu orientieren. Das Fahrzeug "händelt" bzw. "hangelt" sich also temporär an Orientierungspunkten des Seitenbereichs entlang. Nach Beendigung des Spurwechsels kann wieder eine stärkere Orientierung an demselben oder einem anderen Vorderfahrzeug vorgenommen werden.

Die wesentliche Neuerung der Erfindung besteht darin, dass der Seiten- und/oder Rückbereich des Kraftfahrzeugs sensorisch überwacht wird und eine Entscheidung betreffend die Erkennung eines Fahrspurwechsels des Vorderfahrzeugs in Abhängigkeit vom Ergebnis der sensorischen Überwachung getroffen wird.

Vorzugsweise wird zudem der Frontbereich des Kraftfahrzeugs sensorisch überwacht und die Entscheidung betreffend die Erkennung eines Fahrspurwechsels des Vorderfahrzeugs wird auch in Abhängigkeit vom Ergebnis der sensorischen Überwachung des Frontbereichs getroffen.

Durch das erfindungsgemäße Einbeziehen der auf den Seiten- und/oder Rückbereich des Kraftfahrzeugs bezogenen Sensorsignale kann eine gegenüber dem Stand der Technik deutlich erhöhte Zuverlässigkeit hinsichtlich der Erkennung eines Spurwechsels des Vorderfahrzeugs erreicht werden. Eine zuverlässige Erkennung eines Spurwechsels des Vorderfahrzeugs hilft, die bereits anhand von Beispielen beschriebenen Gefahren zu vermeiden, die entstehen können, wenn das Verhalten des Vorderfahrzeugs fälschlicherweise als Spurwechsel interpretiert wird oder wenn ein Spurwechsel des Vorderfahrzeugs nicht als solcher erkannt und das Vorderfahrzeug weiterhin verfolgt wird.

Aus dem Stand der Technik sind zwar so genannte Totwinkel-Warnsysteme bekannt, die mit Hilfe geeigneter Umfeldsensorik insbesondere das hintere seitliche Umfeld des Kraftfahrzeugs überwachen und den Fahrer bei einem Spurwechsel optisch, akustisch oder haptisch warnen, wenn sich ein anderer Verkehrsteilnehmer im toten Winkel befindet. Ein Einbezug der Signale solcher Totwinkel-Warnsysteme in ein Verfahren zur Folgeregelung im Sinne der Erfindung wurde jedoch noch nicht vorgeschlagen. Insbesondere ist es nicht bekannt, eine Entscheidung betreffend die Erkennung eines Fahrspurwechsels eines Vorderfahrzeugs in Abhängigkeit von den Signalen solcher Sensorik zu treffen.

Vorzugsweise werden Verfahren und/oder Vorrichtungen, welche zur Überwachung des "toten" Winkels eines Kraftfahrzeugs vorgesehen sind, für die erfindungsgemäße sensorische Überwachung des Seiten- und/oder Rückbereichs des Kraftfahrzeugs verwendet. Gegebenenfalls können auch Verfahren und/oder Vorrichtungen, welche für andere Zwecke bei dem Kraftfahrzeug vorhanden sind, für die Zwecke der Erfindung modifiziert oder ergänzt werden.

Besonders geeignet für die sensorische Überwachung des Seiten- und/oder Rückbereichs des Kraftfahrzeugs sind aufgrund der typischen Entfernungen und Erfassungswinkel Kameras mit geeigneter nachgeschalteter Bildverarbeitung. Ebenso gut geeignet sind Ultraschallsensoren. Gegebenenfalls können auch Radar- oder Lasersensoren für die Zwecke der Erfindung Anwendung finden. Ebenso kann die relative oder absolute Position und Bewegungsrichtung von Fremdfahrzeugen durch Car-to-Car-Communication an das Kraftfahrzeug gesendet werden. Die obige Aufzählung geeigneter Sensoren ist nicht als abschließend zu verstehen. Andere aus dem Stand der Technik bekannte Messverfahren werden ebenfalls vom Gedanken der Erfindung umfasst.

Gemäß einer bevorzugten Ausführungsform der vorliegenden Erfindung wird die Entscheidung betreffend die Erkennung eines Fahrspurwechsels des Vorderfahrzeugs nicht ausschließlich in Abhängigkeit vom Ergebnis der genannten Verfahren zur sensorischen Überwachung getroffen. Stattdessen ist es vorteilhaft, die Ergebnisse weiterer - an sich bereits aus dem Stand der Technik bekannter - Verfahren zur Erkennung eines Fahrspurwechsels des Vorderfahrzeugs in die Entscheidung miteinzubeziehen. Hierzu gehören etwa Verfahren zur bildverarbeitungsgestützten Erkennung von Lichtsignalen zur Fahrtrichtungsanzeige, weitere Verfahren zur Prognose einer Trajektorie des Vorderfahrzeugs und Verfahren zur Prognose eines Verkehrswegs- bzw. Fahrspurverlaufs.

Die Erkennung eines Fahrspurwechsels des Vorderfahrzeugs muss nicht zwangsläufig zum Abbruch bzw. einer Unterbrechung der Folgeregelung führen. Ebenso kann die Folgeregelung auch im Falle eines Fahrspurwechsels des Vorderfahrzeugs fortgesetzt werden. Dann ist jedoch zu gewährleisten, dass ein Einscheren des Kraftfahrzeugs in die neue Fahrspur gefahrfrei möglich ist. Dies kann insbesondere durch die Verfahren bzw. Vorrichtungen bewerkstelligt werden, welche ohnehin zur erfindungsgemäßen sensorischen Überwachung des Seiten- und/oder Rückbereichs des Kraftfahrzeugs dienen und auf Basis derer der Fahrspurwechsel des Vorderfahrzeugs erkannt wird. Es müssen dann keine gesonderten Verfahren und/oder Vorrichtungen zur Absicherung des Einscherens vorgesehen werden. Vorzugsweise werden zur Überprüfung, ob ein Einscheren in die neue Fahrspur gefahrfrei möglich ist, sogar dieselben Messsignale verarbeitet wie zur erfindungsgemäßen Erkennung des Fahrspurwechsels. Es müssen dann keine gesonderten Messungen zur Absicherung des Einscherens vorgenommen werden.

Für die Zwecke der Erfindung wird der Seiten- und/oder Rückbereich des Kraftfahrzeugs sensorisch überwacht. Denkbar sind also die drei speziellen Ausführungsformen, dass
- lediglich der Seitenbereich,
- lediglich der Rückbereich
oder aber
- sowohl der Seiten- als auch der Rückbereich
überwacht werden.

Eine eventuelle Überwachung des Seitenbereichs beinhaltet vorzugsweise eine Erfassung des Abstands zu einem auf einer benachbarten Fahrspur fahrenden anderen Verkehrsteilnehmer. Insbesondere in Stausituationen ist der seitliche Abstand zu Verkehrsteilnehmern auf einer benachbarten Fahrspur ein wichtiger Indikator hinsichtlich des Verlaufs der eigenen Fahrspur.

Vorzugsweise umfasst eine eventuelle Überwachung des Seitenbereichs alternativ oder zusätzlich eine Erfassung des Abstands zu seitlichen Begrenzungen des Verkehrswegs oder einzelner Fahrspuren. Eine solche Begrenzung kann beispielsweise eine Bordsteinkante, eine Leitplanke oder eine andere Randbebauung darstellen. Eine solche Begrenzung kann aber insbesondere auch eine baustellentypische Vorrichtung zur Verkehrswegs- oder Fahrspurenbegrenzung (z.B. Absperrband, Pylonen, etc.) darstellen.

Die erfindungsgemäße Überwachung des Rückbereichs umfasst eine Erfassung des Querversatzes des Kraftfahrzeugs bezüglich eines in derselben Fahrtrichtung nachfolgenden Verkehrsteilnehmers und/oder einer Veränderung dieses Querversatzes. Bei deutlichen Richtungswechseln kann sogar eine Erfassung der Ausrichtung des Kraftfahrzeugs bezüglich eines nachfolgenden Verkehrsteilnehmers bzw. der Veränderung dieser Relativausrichtung Aussagekraft besitzen und daher berücksichtigt werden.

Insbesondere ein Abgleich des Querversatzes zu dem nachfolgenden Verkehrsteilnehmer mit der Trajektorie des Vorderfahrzeugs kann Rückschlüsse auf den Verlauf der Fahrspur des Kraftfahrzeugs zulassen. Zum Ableiten solcher Rückschlüsse kann die Hypothese herangezogen werden, dass sowohl das Vorderfahrzeug als auch das Kraftfahrzeug als auch der nachfolgende Verkehrsteilnehmer auf derselben Fahrspur fahren. Insbesondere wenn eine solche Hypothese nicht mehr aufrecht erhalten werden kann, ist ein Fahrspurwechsel des Vorderfahrzeugs wahrscheinlich. Unter Umständen kann ein Fahrspunnrechsel des Vorderfahrzeugs also alleine auf der Basis des Scheiterns der genannten Hypothese erkannt werden. Vorzugsweise erfolgt die Erkennung jedoch unter Berücksichtigung weiterer Umfeldinformation. Insbesondere kann es auch vorteilhaft sein, zu prüfen, ob Indizien für einen Fahrspurwechsel des nachfolgenden Verkehrsteilnehmers vorliegen.

Gemäß einer bevorzugten Ausführungsform der vorliegenden Erfindung ist die Gewichtung unterschiedlicher Sensorsignale, welche bei der Entscheidung betreffend die Erkennung eines Fahrspurwechsels des Vorderfahrzeugs berücksichtigt werden, variierbar. Gemäß einer besonders bevorzugten Ausführungsform der vorliegenden Erfindung wird die Gewichtung in Abhängigkeit von der Fahrgeschwindigkeit des Kraftfahrzeugs variiert. Alternativ oder zusätzlich zu einer Anpassung der Gewichtung unterschiedlicher Sensorsignale können auch situationsabhängig ganz unterschiedliche Verfahren zur Entscheidungsfindung angewendet werden.

Ebenso kann die Gewichtung verschoben oder das Verfahren zur Entscheidungsfindung verändert werden, wenn festgestellt wird, dass eine aktuelle Gewichtung keine bzw. keine zuverlässige Entscheidung zulässt.

Durch eine situationsabhängige Auswahl der berücksichtigten Größen und/oder des angewendeten Verfahrens kann beispielsweise erreicht werden, dass das erfindungsgemäße Verfahren nur dann Anwendung findet, wenn durch eine in Fahrtrichtung des Kraftfahrzeugs ausgerichtete Kamera keine Fahrspurmarkierungen erkennbar sind. Das erfindungsgemäße Verfahren kann dann beispielsweise insbesondere in Stausituationen einspringen, in welchen Fahrspurmarkierungen durch andere Fahrzeuge verdeckt sind, oder in Baustellenbereichen, wo Fahrspurmarkierungen fehlen, während in allen anderen Situationen ein im Wesentlichen gemäß dem Stand der Technik gestaltetes Verfahren Anwendung findet.

Anhand der beigefügten Zeichnungen wird im Folgenden ein Ausführungsbeispiel für die Erfindung beschrieben, welches weitere vorteilhafte Ausführungsformen und Weiterbildungen der Erfindung aufzeigt. Dabei zeigen im Einzelnen schematisch
- Fig. 1: die Systemstruktur eines Fahrerassistenzsystems für eine erfindungsgemäße Folgeregelung,
- Fig. 2: den Aufbau sowie die Ein- und Ausgangsgrößen eines Moduls zur Fusion und Situationsinterpretation bei dem Fahrerassistenzsystem und
- Fig. 3: die Anbringung und Ausrichtung von Sensoren an einem Kraftfahrzeug.

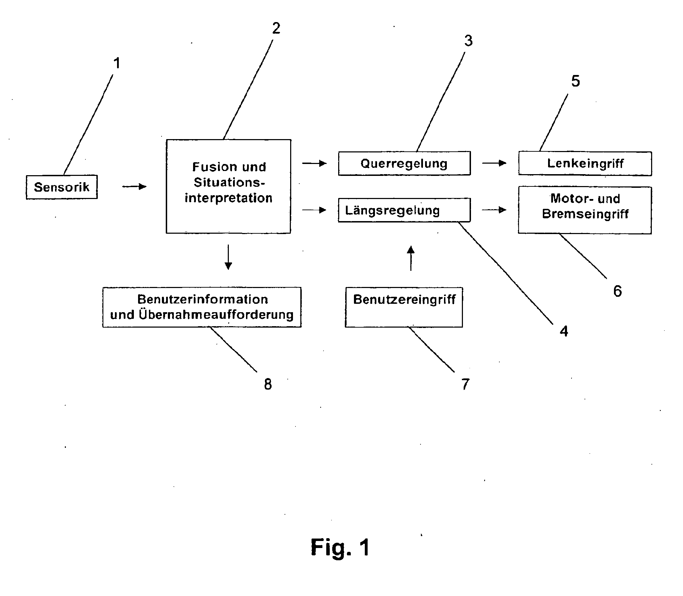

Fig. 1 zeigt die Systemstruktur eines Fahrerassistenzsystems für eine erfindungsgemäße Folgeregelung.

Durch Sensorik 1 wird die Umgebung eines Kraftfahrzeugs erfasst. Die Sensorik 1 umfasst dabei im vorliegenden Beispiel einen Radarsensor 1a, der in Fahrtrichtung des Kraftfahrzeugs ausgerichtet ist und somit im Wesentlichen zur Erfassung von vorausfahrenden Kraftfahrzeugen und einer seitlichen Bebauung eines vorausliegenden Streckenbereichs geeignet ist. Ferner umfasst die Sensorik 1 Mittel zur Überwachung des Seiten- und Rückbereichs des Kraftfahrzeugs. Im vorliegenden Beispiel dienen hierzu drei Kameras - eine Heckkamera 1 b und zwei Seitenkameras 1 c, 1 d. Die Heckkamera 1 b ist entgegen der Fahrtrichtung ausgerichtet und auch als Rückfahrkamera nutzbar. Die beiden Seitenkameras 1c, 1d sind auch zur Vermessung von Parklücken geeignet. Zusätzlich zum Radarsensor 1a ist in Fahrtrichtung des Kraftfahrzeugs außerdem eine Kamera 1 e ausgerichtet.

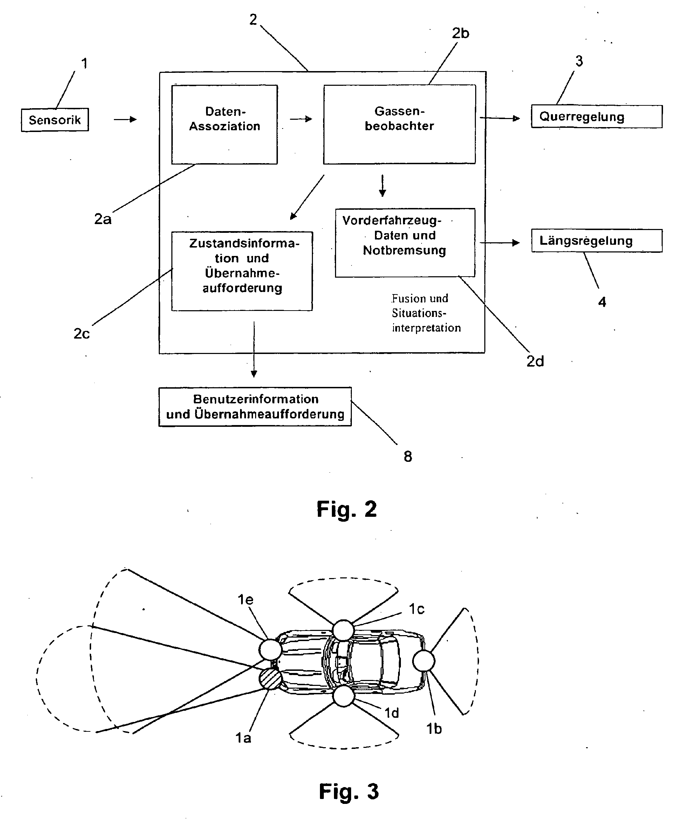

Fig. 3 zeigt schematisch die Anbringung und Ausrichtung der Sensoren 1a, 1 b, 1 c, 1 d, 1 e an dem Kraftfahrzeug.

Die Sensordaten der Sensorik 1, d. h. der Sensoren 1 a, 1 b, 1 c, 1 d und 1 e, werden in einem Fusions- und Situationsinterpretationsblock 2 fusioniert. Durch einen in dem Fusions- und Situationsinterpretationsblock 2 enthaltenen Gassenbeobachter 2b wird eine Gasse, in welcher sich das Kraftfahrzeug gefahrfrei - insbesondere kollisionsfrei - bewegen kann, nach vorne, im Seitenbereich sowie nach hinten beobachtet.

Details zum Aufbau und zur Arbeitsweise des Fusions- und Situationsinterpretationsblocks 2 sind Fig. 2 zu entnehmen. Der Daten-Assoziationsblock 2a entscheidet, welche Sensordaten für den Gassenbeobachter 2b berücksichtigt werden. Relevante Daten sind hier unter anderem die Reflektionspunkte eines durch eine Folgeregelung mit Längs- und Querregelung verfolgten Vorderfahrzeugs (Sensor 1a), Bilddaten eventueller Seitenfahrzeuge auf benachbarten Fahrspuren und gegebenenfalls Bilddaten einer Randbebauung (Sensoren 1c, 1d). Ebenso wird gegebenenfalls der seitliche Versatz und der Abstand eines nachfolgenden Verkehrsteilnehmers auf Basis von Sensordaten der Heckkamera 1 b erfasst und ausgewertet. Auch Informationen über eine mögliche Fahrspurerkennung aus einer der Kamera 1e nachgeschalteten Bildverarbeitung können hier berücksichtigt werden.

Der Gassenbeobachter 2b errechnet aus den genutzten Eingangsdaten eine Solltrajektorie für die Querregelung 3 des Kraftfahrzeugs. Bei spurgenauer Verfolgung des Vorderfahrzeugs entspricht die errechnete Solltrajektorie - solange die Folgeregelung aufrechterhalten wird - im Wesentlichen der Trajektorie des verfolgten Vorderfahrzeugs. Die Querregelung 3 bestimmt ein Lenkmoment, das auf den Lenkaktuator eingespielt wird (Lenkeingriff 5 in Fig. 1), um das Kraftfahrzeug auf der errechneten Solltrajektorie zu halten.

Alternativ oder zusätzlich zur rein bildbasierten Überwachung des Seiten- und Rückbereichs des Kraftfahrzeugs können gemäß anderer Ausführungsformen der Erfindung auch andere - insbesondere abstandsgebende - Sensortechnologien zur Überwachung des Seiten- und Rückbereichs eingesetzt werden.

Für die Längsregelung 4 des Kraftfahrzeugs werden die vom Gassenbeobachter 2b zur Verfügung gestellten Informationen über das Vorderfahrzeug, insbesondere Abstand und Relativgeschwindigkeit in Längsrichtung, zur Bestimmung einer Sollbeschleunigung und Sollverzögerung genutzt (vgl. ACC bzw. ACC Stop & Go). Die Sollbeschleunigung wird über eine Motormomentenschnittstelle und die Sollverzögerung über eine Bremsschnittstelle umgesetzt (Motor- und Bremseingriff 6 in Fig. 1). Zusätzlich wird bei Erkennung einer gefährlichen Situation (z. B. vorausliegende Gasse zu eng) eine Notbremsung eingeleitet. Block 2d verdeutlicht in Fig. 2 die Einbettung der entsprechenden Verarbeitungsschritte ins Gesamtkonzept.

Der Fahrer hat jederzeit über einen Benutzereingriff 7 die Möglichkeit, das System zu übersteuern oder abzuschalten. Zur Unterstützung des Fahrers wird Zustandsinformation gesammelt (vgl. Block 2c) und aufbereitet als Benutzerinformation an den Fahrer ausgegeben (vgl. Block 8). Gegebenenfalls wird der Fahrer auch zur Übernahme aufgefordert.

Eine Besonderheit des beschriebenen Systems besteht darin, dass es geeignet ist, Fahrspurwechsel eines verfolgten Vorderfahrzeugs zuverlässig zu erkennen. Entscheidungen betreffend die Erkennung eines Fahrspurwechsels des Vorderfahrzeugs werden dabei unter gewissen Umständen in Abhängigkeit vom Ergebnis der sensorischen Überwachung des Seiten- und Rückbereichs des Kraftfahrzeugs durch die Sensoren 1 b, 1 c, 1 d getroffen.

Solange Fahrspurmarkierungen in den Bilddaten der Kamera 1 e erkennbar sind, werden Entscheidungen betreffend die Erkennung eines Fahrspurwechsels des Vorderfahrzeugs überwiegend getroffen durch einen Abgleich der Trajektorie des Vorderfahrzeugs, welche überwiegend auf Basis von Sensordaten des abstandsgebenden Sensors 1a bestimmt wird, mit einem Verlauf der Fahrspur, auf der das Vorderfahrzeug fährt. Dieser Verlauf wird überwiegend auf Basis von Bilddaten der Kamera 1e bestimmt.

Sind jedoch keine Fahrspurmarkierungen in den Bilddaten der Kamera 1e erkennbar, so wird die Arbeitsweise des Fusions- und Situationsinterpretationsblocks 2, insbesondere der Blöcke 2a und 2b, auf ein anderes Verfahren umgestellt. Eine entsprechende Rückwirkung des Gassenbeobachters 2b auf den Datenassoziationsblock 2a ist in Fig. 2 durch den Pfeil 2e verdeutlicht. Gemäß der dann veränderten Arbeitsweise werden Bilddaten der Seitenkameras 1 c, 1 d sowie der Heckkamera 1 b ausgewertet, um den Verlauf der eigenen Fahrspur, welche bei der Verfolgung eines Vorderfahrzeugs identisch ist mit der Fahrspur des Vorderfahrzeugs, zumindest näherungsweise zu bestimmen. Dieser Verlauf wird mit der weiterhin überwiegend auf Basis von Sensordaten des abstandsgebenden Sensors 1 a bestimmten Trajektorie des Vorderfahrzeugs abgeglichen. So kann ein Fahrspurwechsel des Vorderfahrzeugs auch bei fehlenden oder nicht erkennbaren Fahrspurmarkierungen zuverlässig erkannt werden.

Der Verlauf der eigenen Fahrspur kann im einfachsten Fall durch einfache geometrische Verfahren basierend auf der Hypothese bestimmt werden, dass Fahrzeuge auf benachbarten Fahrspuren und nachfolgende Verkehrsteilnehmer jeweils ihre Fahrspuren beibehalten. Das Verfahren zur Bestimmung des Verlaufs der eigenen Fahrspur kann jedoch, insbesondere durch Nutzung weiterer Sensorinformation, beliebig verfeinert werden.

Im Falle der Erkennung eines Fahrspurwechsels des Vorderfahrzeugs kann die Folgeregelung beispielsweise selbsttätig abgebrochen und/oder eine Übernahmeaufforderung an den Fahrer ausgegeben werden. Dadurch wird verhindert, dass das eigene Kraftfahrzeug dem Vorderfahrzeug ohne weitere Absicherungsmaßnahmen auf die neue Fahrspur folgt und dabei eventuell ein anderes Fahrzeug auf dieser Fahrspur "schneidet".

Im Falle einer nicht geradlinig verlaufenden Fahrspur wird ein dementsprechend ebenfalls nicht geradliniger Verlauf der Fahrtlinie des Vorderfahrzeugs nicht fälschlich als Fahrspurwechsel interpretiert. Die Folgeregelung kann dann aufrechterhalten werden.

Durch die Erfindung kann eine automatische Querführung, insbesondere eine Folgeregelung im Sinne der Erfindung auch bei unsicherer oder fehlender Fahrspurmarkierung stattfinden. Die Erfindung erhöht somit die Verfügbarkeit und die Sicherheit der Querführung insbesondere in Baustellenbereichen und in Stausituationen.

Die Querführung bzw. Folgeregelung kann durch die Erfindung zudem auch stattfinden, wenn eine zur Erkennung von Fahrspurmarkierungen vorgesehene Sensorik und/oder Signalverarbeitung ausgefallen ist. Auch insofern wird durch die Erfindung die Verfügbarkeit der Folgeregelung erhöht.

## Patentansprüche

1. Verfahren zur Folgeregelung für ein Kraftfahrzeug, durch welches das Kraftfahrzeug auf einem Verkehrsweg mit mehreren Fahrspuren derart längs- und quergeregelt wird, dass in Folge der Längs- und Querregelung ein Vorderfahrzeug durch das Kraftfahrzeug verfolgt wird, wobei die Verfolgung des Vorderfahrzeugs bei Erkennung eines Fahrspurwechsels des Vorderfahrzeugs unterbrechbar ist, und der Rückbereich des Kraftfahrzeugs sensorisch überwacht wird,
**dadurch gekennzeichnet,**
**dass** die Überwachung des Rückbereichs eine Erfassung des Querversatzes des Kraftfahrzeugs bezüglich eines in derselben Fahrtrichtung nachfolgenden Verkehrsteilnehmers und/oder einer Veränderung dieses Querversatzes beinhaltet und dass eine Entscheidung betreffend die Erkennung eines Fahrspurwechsels des Vorderfahrzeugs in Abhängigkeit vom Ergebnis der sensorischen Überwachung zumindest des Rückbereichs getroffen wird.

2. Verfahren nach Anspruch 1, **dadurch gekennzeichnet,**
**dass** ein Verfahren und/oder eine Vorrichtung, welche zur Überwachung des toten Winkels des Kraftfahrzeugs vorgesehen ist, für die sensorische Überwachung des Rückbereichs des Kraftfahrzeugs eingesetzt wird.

3. Verfahren nach einem der Ansprüche 1 oder 2, **dadurch gekennzeichnet,**
**dass** die Gewichtung unterschiedlicher Sensorsignale, welche bei der Entscheidung betreffend die Erkennung des Fahrspurwechsels des Vorderfahrzeugs berücksichtigt werden, variierbar ist.

4. Verfahren nach Anspruch 3, **dadurch gekennzeichnet,**
**dass** die Gewichtung in Abhängigkeit von der Fahrgeschwindigkeit des Kraftfahrzeugs variiert wird.

5. Verfahren nach Anspruch 3, **dadurch gekennzeichnet,**
**dass** die Gewichtung variiert wird, wenn festgestellt wird, dass eine aktuelle Gewichtung keine bzw. keine zuverlässige Entscheidung zulässt.

## Claims

1. A method for follow-up control for a motor vehicle, by means of which the motor vehicle on a traffic route with a plurality of lanes is longitudinally and transversely controlled in such a way that as a consequence of the longitudinal and transverse control, a leading vehicle is followed by the motor vehicle, wherein the following of the leading vehicle can be interrupted when a lane change of the leading vehicle is recognised, and the rear region of the motor vehicle is monitored by sensor, **characterised in that** the monitoring of the rear region contains a detection of the transverse offset of the motor vehicle with regard to a road user following in the same travel direction and/or with regard to a change in this transverse offset and **in that** a decision relating to the recognition of a lane change of the leading vehicle is made depending on the result of the monitoring by sensor at least of the rear region.

2. A method according to claim 1, **characterised in that** a method and/or a device provided to monitor the blind angle of the motor vehicle is used for the monitoring by sensor of the rear region of the motor vehicle.

3. A method according to either of claims 1 or 2, **characterised in that** the weighting of different sensor signals, which are taken into account in the decision relating to the recognition of the lane change of the leading vehicle, can be varied.

4. A method according to claim 3, **characterised in that** the weighting is varied depending on the travelling speed of the motor vehicle.

5. A method according to claim 3, **characterised in that** the weighting is varied if it is ascertained that a current weighting does not allow a decision or not a reliable one.

## Revendications

1. Procédé de régulation de suivi automatisé pour un véhicule automobile à régulation longitudinale et transversale sur un trajet de circulation à plusieurs voies,
de façon que par la régulation longitudinale et transversale, le véhicule suive, un véhicule qui précède,
la poursuite du véhicule qui précède étant interrompue lors de la reconnaissance d'un changement de voie de circulation du véhicule qui précède, et la zone à l'arrière du véhicule est surveillée par des capteurs,
procédé **caractérisé en ce que**
la surveillance de la zone arrière comprend la saisie du décalage transversal du véhicule par rapport à un autre participant à la circulation, qui se déplace dans la même direction et/ou une variation de ce décalage transversal, et
on prend une décision concernant la reconnaissance d'un changement de voie de circulation du véhicule qui précède en fonction du résultat de la surveillance par capteur au moins de la zone arrière.

2. Procédé selon la revendication 1,
**caractérisé en ce que**
la surveillance par capteur de la zone arrière du véhicule utilise un procédé et/ou dispositif prévu pour surveiller l'angle mort du véhicule.

3. Procédé selon la revendication 1 ou 2,
**caractérisé en ce qu'**
on modifie la pondération de signaux de capteur différents pris en compte pour la décision concernant la reconnaissance du changement de voie de circulation du véhicule qui précède.

4. Procédé selon la revendication 3,
**caractérisé en ce qu'**
on modifie la pondération en fonction de la vitesse de déplacement du véhicule.

5. Procédé selon la revendication 3,
**caractérisé en ce qu'**
on modifie la pondération si l'on constate que la pondération actuelle ne permet pas de décision ou ne permet pas de décision fiable.
